# EUROPÄISCHE PATENTANMELDUNG

(11) **EP 2 800 350 A2**
(43) Veröffentlichungstag der Anmeldung: **05.11.2014**
(21) Anmeldenummer: 14168468.8
(22) Anmeldetag: 27.04.2007
(51) Int. Cl.: H04N 5/14, H04N 5/21

(54) **Anordnung und Verfahren zur Aufnahme und Wiedergabe von Bildern einer Szene und/oder eines Objektes**

(30) Priorität: 22.11.2006 DE 102006055641
(62) Teilanmeldung aus: 07722343.6
(71) Anmelder: Koninklijke Philips N.V., 5656 AE Eindhoven (NL)
(72) Erfinder: Schmidt, Alexander, 5600 AE Eindhoven (NL); Meichsner, Jens, 5600 AE Eindhoven (NL); Billert, Ronny, 5600 AE Eindhoven (NL)
(74) Vertreter: Kroeze, Johannes Antonius

(57) **Zusammenfassung**

Die Erfindung betrifft eine Anordnung und ein Verfahren zur Übertragung von 3D-Informationen zum Zwecke der späteren hilfsmittelfrei räumlich wahrnehmbaren Wiedergabe auf Basis von mindestens drei verschiedenen Ansichten. Die Anordnung ist gekennzeichnet durch Mittel zum Ermitteln oder Erstellen der Tiefe für jedes Bild ausgehend von mindestens einem n-Tupel von Bildern, mit n>2, die unterschiedliche Blickwinkel eines Objektes oder einer Szene charakterisieren; und Mittel zum Übertragen des n-Tupels von Bildern zusammen mit den jeweiligen Tiefeninformationen, insbesondere in Tiefenkarten, in einem Übertragungskanal, wobei mindestens zwei Bilder des n-Tupels paarweise unterschiedliche Auflösungen aufweisen.

## Beschreibung

Die Erfindung betrifft eine Anordnung und ein Verfahren zur Aufnahme und Wiedergabe von Bildern einer Szene und/oder eines Objektes. Sie sind insbesondere zur räumlich wahrnehmbaren Wiedergabe der aufgenommenen Bilder geeignet. Fernerhin betrifft die Erfindung ein Verfahren zur Übertragung von räumlich wahrnehmbaren Bildern.

Zum Aufnehmen von 3D-Bildinformationen gibt es momentan im Wesentlichen drei grundlegend verschiedene Verfahren und die dazugehörigen Anordnungen: Erstens, die klassische Stereo-Kamera, bestehend aus zwei gleichartigen Kameras für jeweils ein linkes und ein rechtes Bild. Für eine hochauflösende Wiedergabe sind hier jedoch auch hochauflösende Kamerasysteme notwendig. Für Mehrkanal-Systeme wird eine Interpolation der Zwischenansichten notwendig. Dabei werden Artefakte vor allem in den mittleren Ansichten sichtbar.

Zweitens, die Verwendung eines Multiview-Kamera-Systems. Der Vorteil hier gegenüber der Stereo-Kamera ist die korrekte Bildwiedergabe für Mehrkanal-Systeme. Es werden insbesondere keine Interpolationen notwendig. Nachteilig ist jedoch der hohe Aufwand, der betrieben werden muss, um eine exakte Ausrichtung der -beispielsweise acht-Kameras zueinander zu realisieren. Der erhöhte Kostenfaktor durch die Verwendung mehrerer Kameras, die darüber hinaus weitere Probleme nach sich ziehen, wie unterschiedliche Weiß/Farb/Geometriewerte, die wieder entsprechend ausgeglichen werden müssen, ist nachteilig. Als nachteilig ist es ebenfalls anzusehen, dass bei diesem Verfahren eine extrem hohe Datenrate bewältigt werden muss.

Drittens, die Verwendung einer Tiefen-Kamera. Hierbei kommt eine Farbkamera gemeinsam mit einem Tiefensensor, der die -in der Regel- zyklopische Tiefeninformation der aufzunehmenden Szene registriert, zum Einsatz. Neben dem, dass ein Tiefensensor relativ teuer ist, ist nachteilig, dass diese oftmals nicht sehr exakt arbeiten und/oder kein vertretbarer Kompromiss zwischen Genauigkeit und Geschwindigkeit erreicht wird. Eine generelle Extrapolation wird notwendig, wobei insbesondere in den äußeren Ansichten Artefakte nicht auszuschließen sind und generell Verdeckungsartefakte nicht kaschiert werden können.

Der Erfindung liegt die Aufgabe zugrunde, eine neue Möglichkeit aufzuzeigen, durch die es mit möglichst geringem Aufwand gelingt, Aufnahmen von realen Szenen und/oder Objekten zu erstellen, um sie nachfolgend dreidimensional in zwei oder mehr Ansichten räumlich wahrnehmbar wiederzugeben. Weiterhin ist es Aufgabe der Erfindung, ein geeignetes Verfahren zur Übertragung von räumlich wahrnehmbaren Bildern aufzuzeigen.

Erfindungsgemäß wird die Aufgabe bei einer Anordnung zur Aufnahme und Wiedergabe von Bildern einer Szene und/oder eines Objektes dadurch gelöst, dass mindestens eine Hauptkamera eines ersten Kameratyps zur Aufnahme von Bildern, mindestens eine Satellitenkamera eines zweiten Kameratyps zur Aufnahme von Bildern, wobei der erste und der zweite Kameratyp sich in mindestens einem Parameter, bevorzugt der Bildauflösung, unterscheiden und eine den Kameras nachgeordnete Bildkonvertierungseinrichtung zur Übernahme der Ausgangsbilddaten und zur Aufbereitung derer und ein 3D-Bildwiedergabegerät zur hilfsmittelfrei räumlich wahrnehmbaren Wiedergabe der bereitgestellten Bilddaten vorhanden sind, wobei das 3D-Bildwiedergabegerät mindestens drei Ansichten wiedergibt. Letztgenanntes 3D-Bildwiedergabegerät kann jedoch auch 4, 5, 6, 7, 8, 9 oder sogar noch mehr Ansichten gleichzeitig oder im zeitlichen Mittel wiedergeben. Gerade bei diesen letztgenannten, den so genannten "Multi-View"-artigen 3D-Bildwiedergabegeräten kommen die besonderen Vorteile der Erfindung zum Tragen, nämlich dass mit verhältnismäßig wenigen (z. B. drei) Kameras dennoch mehr Ansichten bereitgestellt werden können, als die Anzahl der Kameras beträgt.

Dabei sind insgesamt mindestens drei Kameras, also wenigstens eine Haupt- und zwei Satellitenkameras oder wenigstens zwei Haupt- und eine Satellitenkamera vorgesehen. Haupt- und Satellitenkamera unterscheiden sich im allgemeinen, jedoch nicht zwingend, durch ihre Qualität. Die Hauptkamera ist dabei meist eine sogenannte High-Quality-Kamera, wobei Satellitenkameras zum Einsatz kommen können, die sich durch geringere Qualität auszeichnen (z. B. Industriekameras) und damit unter anderen Parametern meist -aber nicht zwingend- auch eine niedrigere Auflösung aufweisen. Der Vorteil der Erfindung besteht im Wesentlichen darin, dass neben dem klassischen Einsatz eines Stereo-Kamerasystems, hier bestehend aus im Wesentlichen zwei identischen hochauflösenden Kameras, ein Drei-Kamera-System, vorzugsweise bestehend aus einer zentralen High-Quality-Kamera und zwei zusätzlichen Kameras mit niedriger Auflösung, die links- bzw. rechts der Hauptkamera angeordnet sind, verwendet wird. Die Hauptkamera ist also bevorzugt räumlich zwischen den Satellitenkameras angeordnet. Die Kameras sind dabei in den üblichen Grenzen bzgl. Abstand und Ausrichtung (parallele Ausrichtung oder auf einen Fokus) variierbar. Die Verwendung weiterer Satellitenkameras kann von Vorteil sein, da insbesondere bei der nachfolgenden Aufbereitung der Bilddaten Fehlinterpretationen weiter reduziert werden können. Alle Kameras können sowohl parallel als auch auf einen Punkt ausgerichtet sein. Ebenfalls möglich ist es, dass nicht alle auf einen Punkt ausgerichtet sind (Konvergenzwinkel). Die optischen Achsen der Kameras können ebenfalls sowohl in einer als auch in unterschiedlichen Ebenen liegen, wobei die Objektivmittelpunkte in einer Linie oder im Dreieck (bevorzugt gleichschenklig oder gleichseitig) angeordnet sein sollten. Für besondere Anwendungsfälle können die Objektivmittelpunkte der Kameras auch jeweils ungleiche Abstände zueinander haben (womit die Objektivmittelpunkte ein unregelmäßiges Dreieck bilden würden). Es ist außerdem möglich, dass sich sogar alle (mindestens drei) Kameras (also alle vorhandenen Haupt- und Satellitenkameras) in mindestens einem Parameter, beispielsweise der Auflösung, unterscheiden. Eine Synchronisation der Kameras bzgl. Zoom, Blende, Fokus etc. sollte ebenso wie bzgl. der einzelnen Frames (d.h. frame-genaue Synchronisation bei der Aufnahme) erfolgen. Die Kameras können fest oder beweglich zueinander angeordnet werden, wobei eine automatische Einstellung des Basisabstandes der Kameras ebenso wie die Konvergenzwinkel durchführbar ist.

Von Vorteil können Adaptersysteme sein, die ein erleichtertes Anbringen, insbesondere der Satellitenkameras, an die Hauptkamera ermöglichen. Damit können gewöhnliche Kameras nachträglich als 3D-Kamera umgerüstet werden. Es ist aber ebenso denkbar, bestehende Stereokamerasysteme durch eine zusätzliche Hauptkamera zu erfindungsgemäßen 3D-Kameras umzurüsten.

Fernerhin können im Strahlengang -bevorzugt vor den Objektiven der verschiedenen Kameras- zusätzliche optische Elemente, z. B. teildurchlässige Spiegel, vorhanden sein. Damit ist es zum Beispiel möglich, zwei Satellitenkameras jeweils 90 Grad gedreht zur Hauptkamera anzuordnen, so dass die Kamerakörper aller dreier Kameras derart angeordnet sind, dass die Objektivmittelpunkte horizontal näher aneinander stehen, als wenn alle drei Kameras unmittelbar nebeneinander angeordnet wären. Dann nämlich würde die Ausdehnung der Kamerakörper einen bestimmten, höheren Abstand der Objektivmittelpunkte erzwingen. In dieser Konstellation mit der 90 Grad-Drehung der beiden Satellitenkameras würde ein teildurchlässiger Spiegel im Winkel von etwa 45 Grad zum Mittelpunktstrahl aus den Objektiven der Satellitenkameras in Reflexionsstellung folgen, während der gleiche Spiegel im Winkel von ebenfalls etwa 45 Grad zum Mittelpunktstrahl aus dem Objektiv der Hauptkamera in Transmissionsstellung folgt.

Bevorzugt bilden die Objektivmittelpunkte der Hauptkamera und mindestens zweier Satellitenkameras ein gleichschenkliges Dreieck.

Für besondere Ausgestaltungen kann es außerdem sinnvoll sein, die Satellitenkameras als Schwarz-Weiß-Kameras auszubilden und bevorzugt den von ihnen aufgenommenen Bildern hernach automatisch einen Farbwert zuzuweisen.

Die Aufgabe wird auch durch ein Verfahren zur Aufnahme und Wiedergabe von Bildern einer Szene und/oder eines Objektes gelöst, welches die folgenden Schritte umfasst:
- Erstellung von mindestens einem n-Tupel von Bildern, mit n>2, wobei mindestens zwei Bilder paarweise verschiedene Auflösungen aufweisen,
- Übernahme der Bilddaten in eine Bildkonvertierungseinrichtung, in der nachfolgend eine Rektifizierung, eine Farbjustierung, eine Tiefen- oder Disparitätserkennung und anschließende Generation weiterer Ansichten aus dem n-Tupel von Bildern und den Tiefen- bzw. Disparitätserkennungswerten durchgeführt wird, wobei mindestens eine Ansicht generiert wird, die keinem der erstellten Bilder des n-Tupels exakt entspricht,
- anschließend eine Kombination von mindestens drei verschiedenen Ansichten oder Bildern entsprechend der Zuordnungsvorschrift des 3D-Displays eines 3D-Bildwiedergabegerätes zur hilfsmittelfrei räumlichen Darstellung erstellt wird, und abschließend die Darstellung des kombinierten 3D-Bildes auf dem 3D-Display durchgeführt wird.

Die Tiefenerkennung und anschließende Generation weiterer Ansichten aus dem n-Tupel von Bildern und den Tiefen- bzw. Disparitätserkennungswerten kann beispielsweise durch den Aufbau einer Stackstruktur und eine Projektion der Stackstruktur auf eine gewünschte Ansicht durchgeführt werden

Der Aufbau einer Stackstruktur kann auch durch sonstige anwendbare Tiefen- oder Disparitätserkennungsalgorithmen ersetzt werden, wobei dann die erkannten Tiefen- bzw. Disparitätswerte für die Erstellung von gewünschten Ansichten eingesetzt werden. Eine Stackstruktur kann allgemein einer Schichtstruktur von graphischen Elementen in unterschiedlichen (virtuellen) Ebenen entsprechen.

Bei der Verwendung eines 3D-Kamerasystems, bestehend aus Kameras unterschiedlicher Kameratypen mit unterschiedlichen Bildauflösungen, macht es sich erforderlich, dass nach Übernahme der Bilddaten in die Bildkonvertierungseinrichtung zunächst eine Größenanpassung vorgenommen wird. Im Ergebnis dessen liegen Bilder mit jeweils der gleichen Auflösung vor. Diese kann der höchsten Auflösung der Kameras entsprechen, sie ist jedoch bevorzugt gleich der der niedgrigstauflösenden Kamera(s). Daran anschließend erfolgt die Rektifizierung, d.h. eine geometrische Entzerrung der Kamerabilder (Ausgleich von möglichen Linsenverzerrungen, Kameraverdrehungen, Zoomdifferenzen etc.) wird vorgenommen. Die Größenanpassung kann auch im Rahmen des Rektifizierungsprozesses erfolgen. Unmittelbar daran anschließend erfolgt eine Farbjustierung, beispielsweise nach Lehre der Schriften "Joshi, N. Color Calibration for Arrays of Inexpensive Image Sensors. Technical Report CSTR 2004-02 3/31/04 4/4/04, Stanford University, 2004" und A. LLie and G. Welch. "Ensuring color consistency across multiple cameras", ICCV 2005. Es werden insbesondere die Farb-/Helligkeitswerte der Kamerabilder angeglichen, so dass ein einheitliches oder zumindest ein vergleichbares Niveau zu verzeichnen ist. Für die nunmehr vorliegenden Bilddaten wird zur Tiefenerkennung die Stackstruktur aufgebaut. Dabei werden die Eingangsbilder zeilenweise miteinander verglichen, indem sie im ersten Schritt übereinander gelegt werden. Der Zeilenvergleich kann unter Umständen auch schräg erfolgen, dies wird dann günstig sein, wenn die Kameras nicht horizontal zueinander angeordnet sind. Bei übereinanderliegenden Pixeln mit gleichen Farbwerten wird dieser gespeichert, wenn jedoch übereinanderliegende Pixel unterschiedliche Farbwerte aufweisen, dann wird kein Wert gespeichert. Danach werden die Zeilen gegeneinander in entgegengesetzte Richtungen in definierten Schritten (z. B. um ¼ oder ½ Pixel) verschoben, wobei nach jedem Schritt das Ergebnis des Vergleiches wieder gespeichert wird. Im Ergebnis liegt die dreidimensionale Stackstruktur mit den Koordinaten X, Y und Z vor, wobei X und Y den Pixelkoordinaten des Eingangsbildes entspricht, während Z den Grad der Verschiebung der Ansichten zueinander darstellt. Bei der Verwendung von zwei Kameras werden also jeweils zwei Zeilen verglichen und bei der Verwendung von drei Kameras jeweils drei Zeilen verglichen und gegeneinander verschoben. Möglich ist es, bei der Verwendung von mehreren, z. B. drei, Kameras dennoch jeweils nur zwei Zeilen miteinander zu kombinieren, wobei dann ein Abgleich der Vergleiche nochmals durchgeführt werden muss. Bei einem Vergleich von drei oder mehr Zeilen gibt es weit weniger Mehrdeutungen gegenüber dem Vergleich zwischen den zwei Zeilen lediglich zweier Eingangsbilder. Bei der sich anschließenden Optimierung der Stackstruktur geht es im Wesentlichen darum, bei mehrdeutigen Abbildungen von Bildelementen im Stack die höchst unwahrscheinlichen Kombinationen zu löschen. Dies trägt darüber hinaus zur Datenreduktion bei. Eine weitere Reduktion erhält man, indem eine Höhenprofillinie aus den verbliebenen Elementen erstellt wird, um eine eindeutige Abbildung der Farbwerte in eine diskrete Tiefebene (Z Koordinate) zu erreichen. Normalerweise schließt sich nun die Projektion der Stackstruktur auf die gewünschten Ansichten an. Dabei sollten mindestens zwei Ansichten erstellt werden, wobei eine davon immer noch einem Eingangsbild entsprechen könnte. Dies erfolgt jedoch in der Regel in Kenntnis des sich anschließenden 3D-Bildwiedergabegerätes. Die anschließende Kombination der verschiedenen bereitgestellten Ansichten entspricht der Zuordnungsvorschrift des 3D-Displays.

Alternativ können in dem vorbeschriebenen Verfahren zur Aufnahme und Wiedergabe von Bildern einer Szene und/oder eines Objektes die Bilder mittels Computers erstellt werden. Bevorzugt wird dabei zu jedem Bild jeweils eine Tiefenkarte erstellt, so dass die Schritte Rektifizierung, Farbjustierung und Tiefen- oder Disparitätserkennung entfallen können. Vorteilhaft weisen auch mindestens zwei der drei Tiefenkarten eine paarweise voneinander unterschiedliche Auflösung auf. So können in einer bevorzugten Ausgestaltung n=3 Bilder vorgesehen sein, wobei eines die (vollfarbige) Auflösung von 1920x1080 Pixeln und zwei die (vollfarbige) Auflösung von 1280x720 aufweisen, während die dazugehörigen Tiefenkarten 960x540 bzw. 640x360 Pixel aufweisen. Das Bild mit der höheren Auflösung entspricht räumlich gesehen einer Perspektivansicht, die zwischen den Perspektivansichten der anderen beiden Bilder liegt.

Das jeweils verwendete 3D-Bildwiedergabegerät kann vorzugsweise 4, 5, 6, 7, 8, 9 oder sogar noch mehr Ansichten gleichzeitig oder im zeitlichen Mittel wiedergeben. Gerade bei diesen letztgenannten, den so genannten "Multi-View"-artigen 3D-Bildwiedergabegeräten kommen die besonderen Vorteile der Erfindung zum Tragen, nämlich dass mit verhältnismäßig wenigen (z. B. drei) ursprünglich erstellten Bildern dennoch mehr Ansichten für die räumliche Darstellung bereitgestellt werden können, als die Anzahl der ursprünglich erstellten Bilder beträgt. Die weiter vorn genannte Kombination von mindestens drei verschiedenen Ansichten oder Bildern entsprechend der Zuordnungsvorschrift des 3D-Displays eines 3D-Bildwiedergabegerätes zur hilfsmittelfreien räumlichen Darstellung kann im Übrigen auch eine zeitliche - nicht allein eine räumliche - Kombination der Ansichten beinhalten.

Ein weiterer wesentlicher Vorteil der Erfindung besteht jedoch darin, dass nach dem Optimierungsschritt der Stackstruktur die Tiefe pro Originalbild ermittelt wird. Im Ergebnis liegen die Daten in einem äußert effizienten Datenübertragungsformat vor, nämlich als n Bilder (z. B. Originalbilder oder auch Ansichten) plus n Tiefenbilder (mit vorzugsweise n=3), so dass auch eine deutlich geringere Datenrate als bei der Übertragung sämtlicher Ansichten erzielt wird. In das 3D-Bildwiedergabegerät wären dann folgerichtig eine Einheit zur Rekonstruktion der Stackstruktur und die Einheit zur Projektion der Stackstruktur auf die gewünschte Ansicht zu integrieren.

Für die vorgenannten Schritte kann jeweils an Stelle der Tiefe auch die Disparität verwendet werden. Überdies sei angemerkt, dass eine Projektion prinzipiell auch eine reine Verschiebung mit einschließt.

Selbstverständlich können auch andere Tiefen- bzw. Disparitätserkennungsverfahren als das vorstehend genannte eingesetzt werden, um aus dem n-Tupel von Bildern (mit n>2) die Tiefe- bzw. die Disparitäten zu erkennen und/oder daraus weitere Ansichten zu generieren. Derartige alternative Verfahren oder Teilverfahren sind beispielsweise beschrieben in den Schriften "Tao, H. and Sawhney, H., Global matching criterion and color segmentation based stereo, in Proc. Workshop on the Application of Computer Vision (WACV2000), pp. 246-253, December 2000", "M. Lin and C. Tomasi. "Surfaces with occlusions from layered Stereo". Technical report, Stanford University, 2002. In preparation.", "C. Lawrence Zitnick, Sing Bing Kang, Matthew Uyttendaele, Simon Winder, Richard Szeliski, "High-quality video view interpolation using a layered representation", International Conference on Computer Graphics and Interactive Techniques, ACM SIGGRAPH 2004, Los Angeles, California, pp: 600 - 608", "S. M. Seitz and C. R. Dyer "View Morphing" Proc. SIGGRAPH 96, 1996, 21-30.".

In einer vorteilhaften Ausgestaltung der Erfindung entsteht ein Verfahren zur Übertragung von 3D-Informationen zum Zweck der späteren hilfsmittelfrei räumlich wahrnehmbaren Wiedergabe auf Basis von mindestens drei verschiedenen Ansichten, bei welchem ausgehend von mindestens einem n-Tupel von Bildern, mit n>2, die unterschiedliche Blickwinkel eines Objektes oder einer Szene charakterisieren, für jedes Bild die Tiefe ermittelt oder erstellt wird und hernach in einem Übertragungskanal das n-Tupel von Bildern zusammen mit den jeweiligen Tiefeninformationen (in Tiefenkarten) übertragen wird, wobei mindestens zwei Bilder des n-Tupels paarweise unterschiedliche Auflösungen aufweisen (es können aber auch alle Bilder des n-Tupels paarweise unterschiedliche Auflösungen aufweisen). Der Übertragungskanal kann beispielsweise ein digitales Fernsehsignal, das Internet oder eine DVD (HD, SD, BlueRay etc.) sein. Als Komprimierstandard kann vorteilhaft MPEG-4 eingesetzt werden.

Vorteilhaft weisen auch mindestens zwei der drei Tiefenkarten eine paarweise voneinander unterschiedliche Auflösung auf. So können in einer bevorzugten Ausgestaltung n=3 Bilder vorgesehen sein, wobei eines die (vollfarbige) Auflösung von 1920x1080 Pixeln und zwei die (vollfarbige) Auflösung von 1280x720 aufweisen, während die dazugehörigen Tiefenkarten 960x540 bzw. 640x360 Pixel aufweisen. Das Bild mit der höheren Auflösung entspricht räumlich gesehen einer Perspektivansicht, die zwischen den Perspektivansichten der anderen beiden Bilder liegt.

Das jeweils verwendete 3D-Bildwiedergabegerät kann vorzugsweise 4, 5, 6, 7, 8, 9 oder sogar noch mehr Ansichten gleichzeitig oder im zeitlichen Mittel wiedergeben. Gerade bei diesen letztgenannten, den so genannten "Multi-View"-artigen 3D-Bildwiedergabegeräten kommen die besonderen Vorteile der Erfindung zum Tragen, nämlich dass mit verhältnismäßig wenigen (z. B. drei) ursprünglich erstellten Bildern dennoch mehr Ansichten bereitgestellt werden können, als die Anzahl der ursprünglich erstellten Bilder beträgt. Die Rekonstruktion aus dem übertragenen n-Tupel von Bildern zusammen mit den jeweiligen Tiefeninformationen, wobei mindestens zwei Bilder des n-Tupels paarweise unterschiedliche Auflösungen aufweisen, in verschiedene Ansichten geschieht beispielsweise folgendermaßen: In einem dreidimensionalen Koordinatensystem werden jeweils die Farbinformationen jedes Bildes - betrachtet aus einer geeigneten Richtung - in den entsprechend durch die jeweiligen zu dem Bild gehörenden Tiefeninformation gekennzeichneten Tiefenpositionen angeordnet. Damit entsteht ein dreidimensionales farbiges Volumen mit Volumenpixeln, welches aus verschiedenen Perspektiven bzw. Richtungen durch eine virtuelle Kamera bzw. Parallelprojektionen abbildbar ist. Auf diese Weise können aus den übertragenen Informationen vorteilhaft mehr als drei Ansichten regeneriert werden. Andere Rekonstruktionsaigorithmen für die Ansichten bzw. Bilder sind möglich.

Ungeachtet dessen sind die übertragenen Informationen sehr universell rekonstruierbar, z. B. als Schichtbilder oder Volumenpixel. Derartige Bildformate sind für spezielle 3D-Darstellungsverfahren, etwa Volumen-3D-Display, notwendig.

Überdies können bei sämtlichen in dieser Erfindung vorgeschlagenen Übertragungsvarianten noch zusätzlich Meta-Informationen, beispielsweise in einem sogenannten Alpha-Kanal mitübertragen werden. Hierbei kann es sich um ergänzende Informationen zu den Bildern handeln, wie etwa geometrische Verhältnisse der n>2 Bilder (etwa Relativwinkel zueinander, Kameraparameter), Transparenzinformationen oder Umrissinformationen.

Die Erfindung soll nachstehend anhand von Ausführungsbeispielen näher erläutert werden. Die Zeichnungen zeigen:
- Fig. 1:: eine Prinzipansicht der erfindungsgemäßen Anordnung
- Fig. 2:: eine Variante mit einer Hauptkamera und zwei Satellitenkameras
- Fig. 3:: schematische Darstellung der schrittweisen Verschiebung zweier Zeilen gegeneinander und Generierung der Z Koordinate
- Fig. 4:: Optimierungsschema durch Eliminierung von Mehrdeutigkeiten bzgl. Fig. 3
- Fig. 5:: Optimierungsschema durch Reduktion der Elemente auf eine eindeutige Höhenprofillinie bzgl. Fig. 4
- Fig. 6: schematische Darstellung der schrittweisen Verschiebung dreier Zeilen gegeneinander und Generierung der Z Koordinate
- Fig. 7:: Optimierungsschema durch Eliminierung von Mehrdeutigkeiten bzgl. Fig. 6
- Fig. 8:: Optimierungsschema durch Reduktion der Elemente auf eine eindeutige Höhenprofillinie bzgl. Fig. 7
- Fig. 9: schematische Darstellung einer Projektion einer Ansicht aus dem Optimierungsschema
- Fig. 10: eine schematische Darstellung für eine Bildkombination von vier Bildern, geeignet für die hilfsmittelfrei räumliche Wiedergabe (Stand der Technik)

- Fig. 11: eine schematische Darstellung für das erfindungsgemäße Übertragungsverfahren

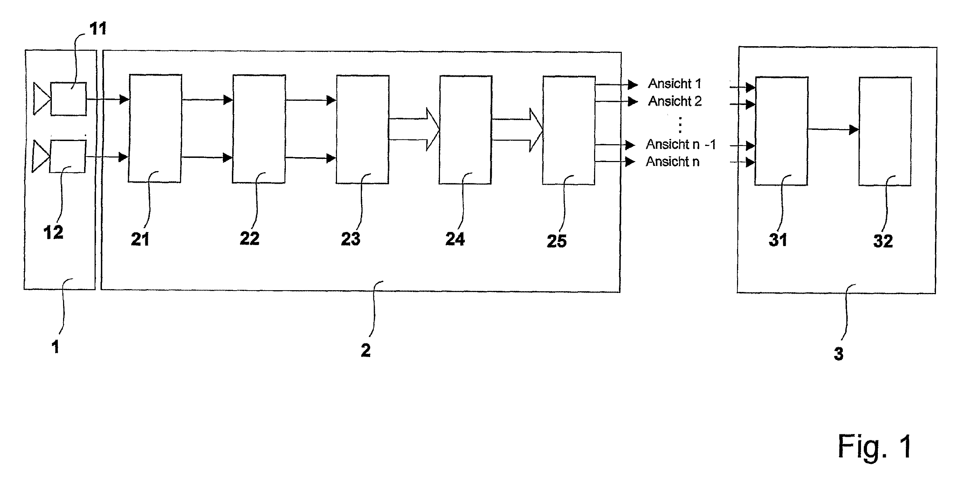

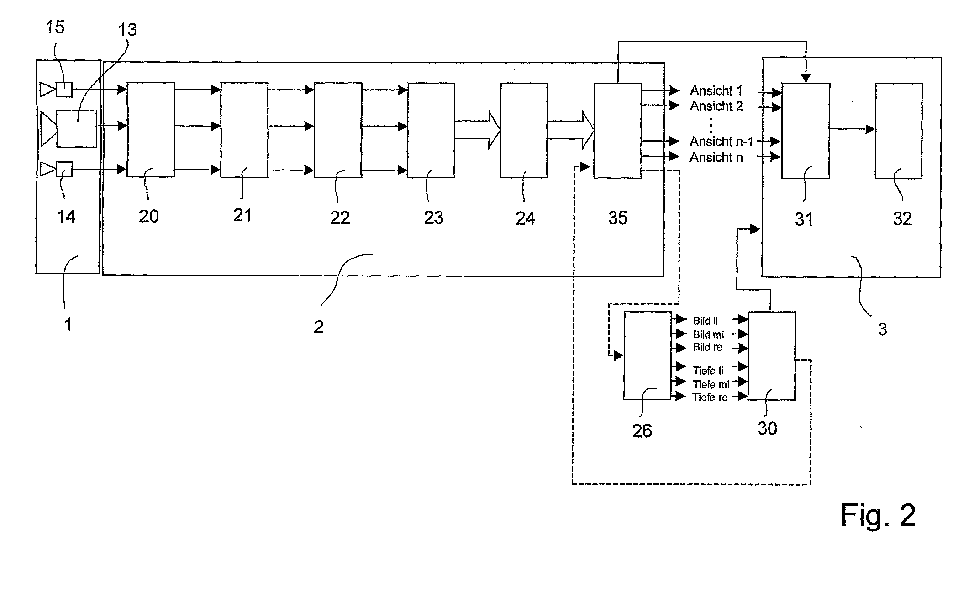

Eine erfindungsgemäße Anordnung besteht im Wesentlichen aus einem Stereo-Kamerasystem 1, einer Bildkonvertierungseinrichtung 2 und einem 3D-Bildwiedergabegerät 3, wobei gemäß Fig. 1 das Stereo-Kamerasystem 1 eine rechte Kamera 11 und eine linke Kamera 12, die Bildkonvertierungseinrichtung 2 eine Rektifizierungseinheit 21, eine Farbjustierungseinheit 22, eine Einheit zum Aufbau der Stackstruktur 23, eine Einheit zur Optimierung der Stackstruktur 24 sowie eine Einheit zur Projektion der Stackstruktur auf die gewünschte Ansicht 25 und das 3D-Bildwiedergabegerät 3 eine Bildkombinationseinheit 31 und ein 3D-Display 32, wobei das 3D-Display 32 mindestens drei Ansichten einer Szene/ eines Gegenstandes oder sonstiger Objekte zur räumlichen Darstellung wiedergibt, enthält. Das 3D-Display 32 kann beispielweise auch basierend auf 4, 5, 6, 7, 8, 9 oder noch mehr Ansichten arbeiten. Beispielhaft kommt ein 3D-Display 32 vom Typ "Spatial View 19 Zoll" in Frage. Gemäß Fig. 2 ist eine weitere erfindungsgemäße Anordnung aufgezeigt. Hierbei enthält das 3D-Kamerasystem 1 eine Hauptkamera 13, eine erste Satellitenkamera 14 und eine zweite Satellitenkamera 15. Die Bildkonvertierungseinrichtung 2 enthält eine Größenanpassungseinheit 20, eine Rektifizierungseinheit 21, eine Farbjustierungseinheit 22, eine Einheit zum Aufbau der Stackstruktur 23, eine Einheit zur Optimierung der Stackstruktur 24 sowie eine Einheit zur Ermittlung der Tiefe 26 und das 3D-Bildwiedergabegerät 3 enthält, wie aus Fig. 2 ersichtlich, eine Einheit zur Rekonstruktion der Stackstruktur 30, eine Einheit zur Projektion der Stackstruktur auf die gewünschte Ansicht 35, eine Bildkombinationseinheit 31 sowie ein 3D-Display 32.

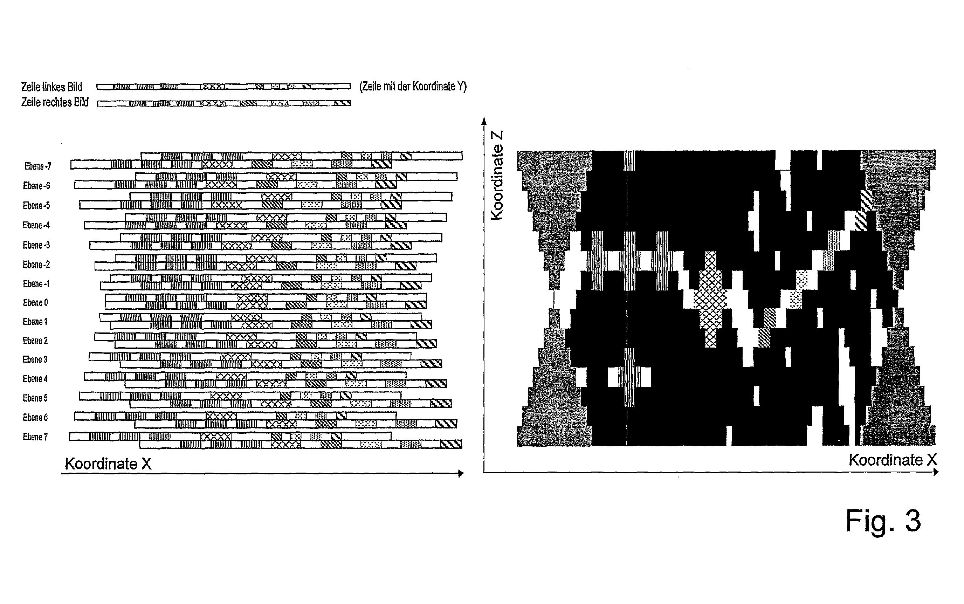

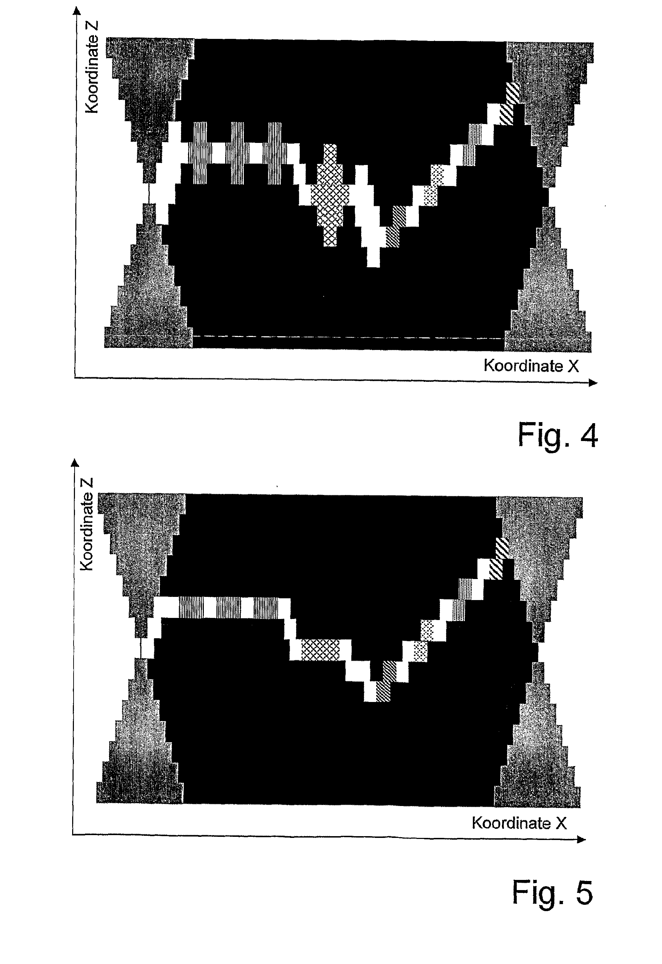

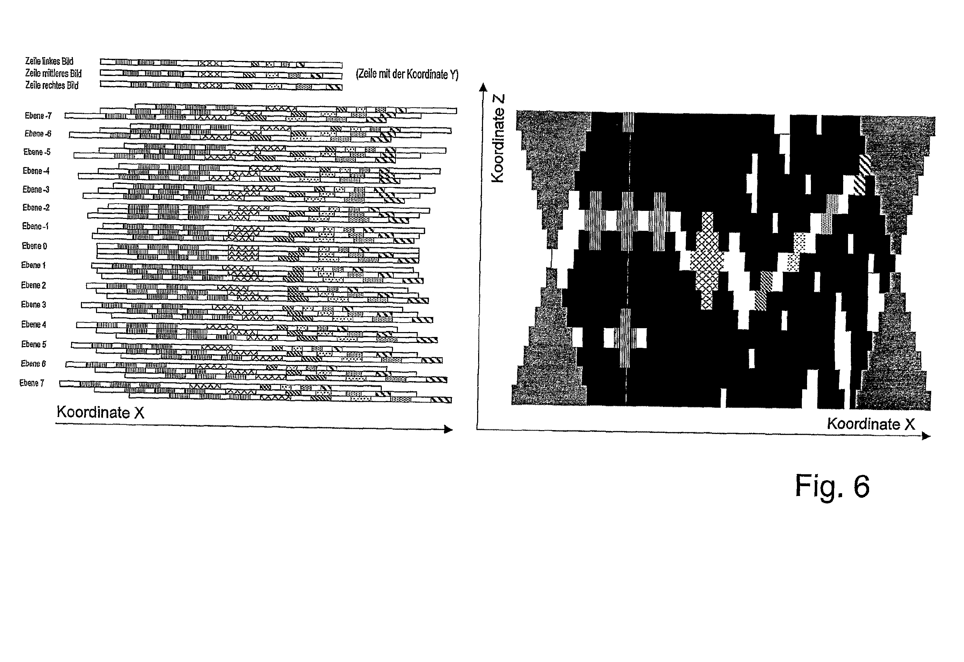

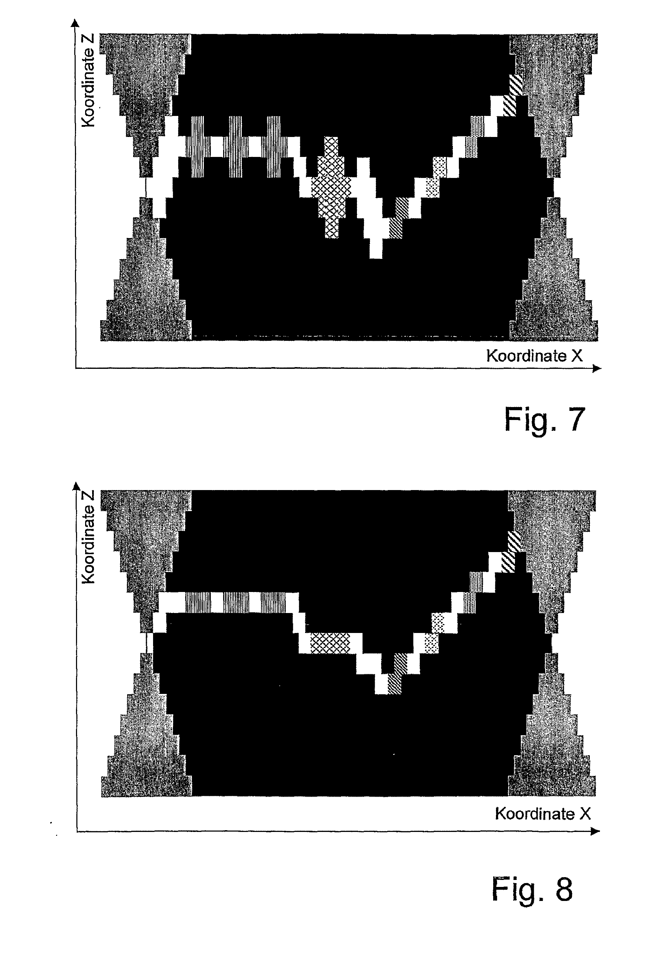

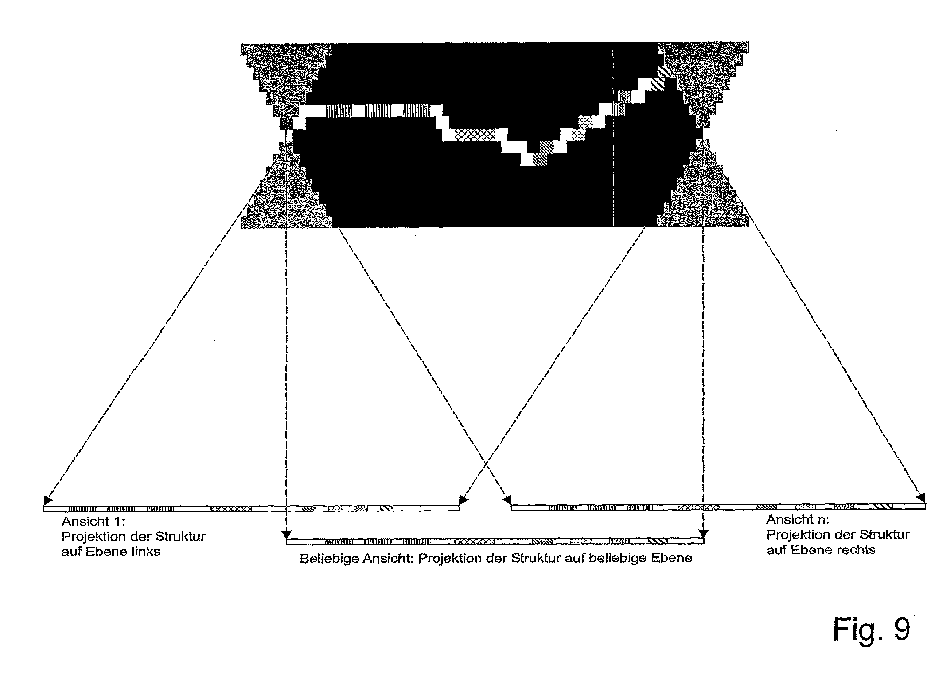

Gemäß der Ausführung nach Fig. 1 enthält das Stereo-Kamerasystem 1 zwei identische Kameras (11,12) mit gleichem Auflösungsvermögen, so dass die aufgenommenen Bilddaten jeweils unmittelbar der Rektifizierungseinheit 21 zugeleitet werden können. Gemäß der Ausführung nach Fig. 2 besteht das 3D-Kamerasystem 1 aus einer Hauptkamera 13 und zwei Satellitenkameras 14, 15, wobei die Hauptkamera 13 eine so genannte High-Quality-Kamera mit hohem Auflösungsvermögen ist, hingegen die beiden Satellitenkameras 14, 15 mit einem geringeren Auflösungsvermögen ausgestattet sind. Die Kamerapositionen untereinander sind dabei, wie üblich, in bekannten Grenzen bezüglich Abstand und Ausrichtung variierbar, um stereoskopische Bilder aufnehmen zu können. Die aufgenommenen Bilddaten der Kameras (13, 14, 15) werden gemäß Fig. 2 der Größenanpassungseinheit 20 zugeführt. Hier erfolgt eine Angleichung der Bildauflösung von den Satellitenkameras 14, 15 an die Auflösung der Hauptkamera 13, so dass alle Bilder die gleiche Auflösung aufweisen. In der nachgeordneten Rektifizierungseinheit 21 erfolgt nun eine mögliche Entzerrung der Kamerabilder, d.h. es erfolgt ein Ausgleich von Linsenverzerrungen, Kameraverdrehungen, Zoomdifferenzen etc.. An die Rektifizierungseinheit 21 schließt sich die Farbjustierungseinheit 22 an. Hier erfolgt eine Angleichung der Farb-/Helligkeitswerte der aufgenommenen Bilder an ein einheitliches Niveau. Die so korrigierten Bilddaten werden nunmehr der Einheit zum Aufbau der Stackstruktur 23 zugeführt. Es werden die Eingangsbilder zeilenweise miteinander verglichen. Der Vergleich gemäß Fig. 3 basiert dabei auf der Ausgestaltung des Stereo-Kamerasystems 1 gemäß Fig. 1, denn hier gibt es den Vergleich von jeweils nur zwei Zeilen. Im ersten Schritt werden zunächst zwei Zeilen jeweils mit derselben Y Koordinate übereinandergelegt, welches gemäß Fig. 3 der Ebene 0 entspricht. Der Vergleich wird pixelweise durchgeführt und das Ergebnis des Vergleiches wird gemäß Fig. 3 entsprechend der vorliegenden Vergleichsebene als Z Koordinate abgespeichert, wobei übereinanderliegende Pixel mit gleichem Farbwert diesen behalten, hingegen bei Ungleichheit kein Farbwert gespeichert wird. Im zweiten Schritt werden die Zeilen gemäß Fig. 3 jeweils ½ Pixel verschoben und es kommt zur Zuordnung der Ebene 1, bzw. es erfolgt ein nächster Vergleich in der Ebene 1, dessen Ergebnis in der Ebene 1 (Z Koordinate) abgespeichert wird. Die Vergleiche werden im allgemeinen, wie aus Fig. 3 ersichtlich, bis zur Ebene 7 und dann Ebene -1 bis Ebene-7 durchgeführt und entsprechend jeweils als Z Koordinate in der entsprechenden Ebene abgespeichert. Die Anzahl der Ebenen entspricht hierbei der maximal auftretenden Tiefeninformation und kann je nach Bildinhalt variieren. Die so aufgebaute dreidimensionale Struktur mit den XYZ Koordinaten bedeutet, dass für jedes Pixel über die zugehörige Z Koordinate der Grad der Verschiebung der Ansichten zueinander abgespeichert ist. Der gleiche Vergleich wird gemäß Fig. 6 auf Basis der Ausführungsform von Fig. 2 durchgeführt, nur das hier in entsprechender Weise drei Zeilen verglichen werden. Ein einfacher Vergleich zwischen Fig. 6 und Fig. 3 zeigt, dass durch den Vergleich dreier Zeilen wesentlich weniger Fehlinterpretationen erfolgten. Es ist also vorteilhaft, mehr als zwei Zeilen in den Vergleich einzubeziehen. Die erzeugte Stackstruktur, die sich auch dadurch auszeichnet, dass nunmehr die Eingangsbilder nicht mehr einzeln vorliegen, werden der nachfolgenden Einheit zur Optimierung der Stackstruktur 24 zugeführt. Hier werden mehrdeutige Abbildungen von Bildelementen ermittelt, mit dem Ziel, derartige Fehler aufgrund von unwahrscheinlichen Kombinationen zu löschen, so dass eine korrigierte Datenmenge gemäß Fig. 4 oder auch Fig. 7 erzeugt wird. Im nachfolgenden Schritt wird eine möglichst flache bzw. stetige Höhenprofillinie aus den verbleibenden Elementen erstellt, um eine eindeutige Abbildung der Farbwerte in eine diskrete Tiefenebene (Z Koordinate) zu erreichen. Die Ergebnisse sind in Fig. 5 bzw. Fig. 8 dargestellt. Das Ergebnis gemäß Fig. 5 wird nunmehr gemäß Fig. 1 der Einheit zur Projektion der Stackstruktur auf die gewünschte Ansicht 25 zugeführt. Hier erfolgt die Projektion der Stackstruktur auf eine festgelegte Ebene im Raum. Die zu erzeugende Ansicht wird dabei über den Winkel der Ebene, wie aus Fig. 9 ersichtlich, erzeugt. Dabei wird in der Regel mindestens eine Ansicht erzeugt, die keinem der von dem Kamerasystem 1 aufgenommenen Bildern exakt entspricht. Sämtliche erzeugten Ansichten liegen am Ausgang der Bildkonvertierungseinrichtung 2 an und können somit dem nachfolgenden 3D-Bildwiedergabegerät 3 zur stereoskopischen Wiedergabe übergeben werden, wobei mittels der enthaltenen Bildkombinationseinheit 31 zunächst die Kombination der verschiedenen Ansichten entsprechend der vorgegebenen Zuordnungsvorschrift des 3D-Displays 32 erfolgt.

Gemäß Fig. 2 wird ein anderer Weg zur Übertragung der aufbereiteten Daten an das 3D-Bildwiedergabegerät 3 gewählt. Der Einheit zur Optimierung der Stackstruktur 24 folgt hier die Einheit zur Ermittlung der Tiefe 26. Durch die Ermittlung der Tiefe der Bilder wird ein besonders effizientes Datenübertragungsformat geschaffen. Übertragen werden hier nämlich nur drei Bilder und drei Tiefenbilder, und zwar bevorzugt im MPEG-4 Format. Gemäß Fig. 2 ist in dem 3D-Bildwiedergabegerät 3 eingangsseitig eine Einheit zur Rekonstruktion der Stackstruktur 30 mit nachfolgender Bildkombinationseinheit 31 und einem 3D-Display 32 vorhanden. Die Übernahme der Bilder und die Tiefen können in der Einheit zur Rekonstruktion der Stackstruktur 30 besonders effizient durch inverse Projektion in die Stackstruktur wieder gewandelt werden, so dass die Stackstruktur der nachfolgenden Einheit zur Projektion der Stackstruktur auf die gewünschte Ansicht 35 bereitgestellt werden kann. Der weitere Weg ist dann identisch zur Variante gemäß Fig. 1, nur dass nunmehr vorteilhaft keine Übertragung sämtlicher Ansichten erfolgen muss.

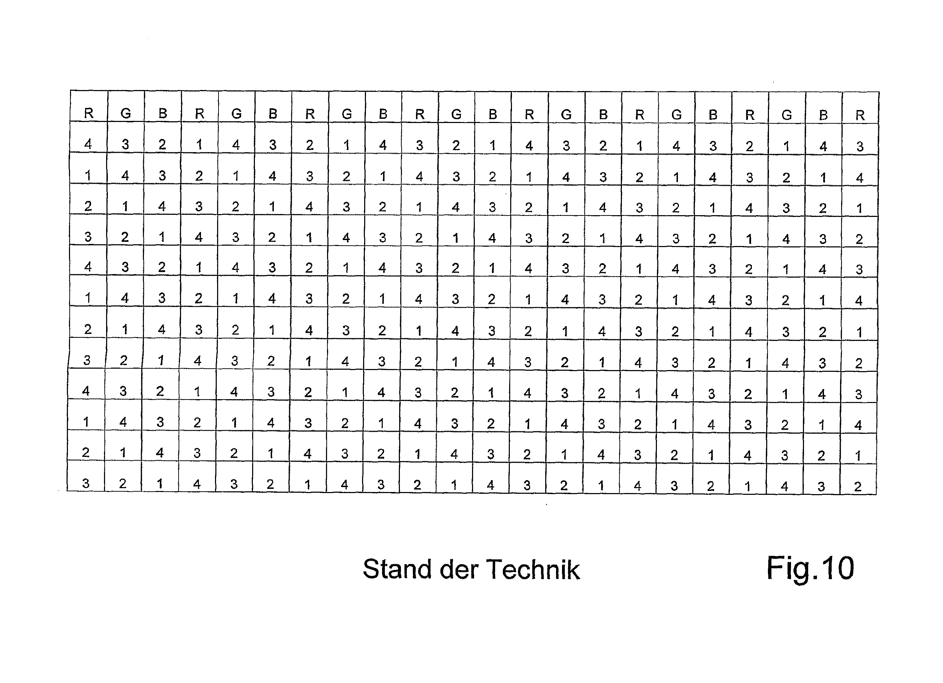

Die Fig.10 zeigt zum besseren Verständnis eine schematische Darstellung aus dem Stand der Technik (JP 08-331605) für eine Bildkombination von vier Bildern, geeignet für die hilfsmittelfrei räumliche Wiedergabe auf einem 3D-Display, beispielsweise auf der Basis von geeigneter Lentikular- oder Barrieretechnologie. Dazu sind die vier Bilder bzw. Ansichten in der Bildkombinationseinheit 31 gemäß dem für das 3D-Display 32 geeigneten Bildkombinationsstruktur miteinander verwoben worden.

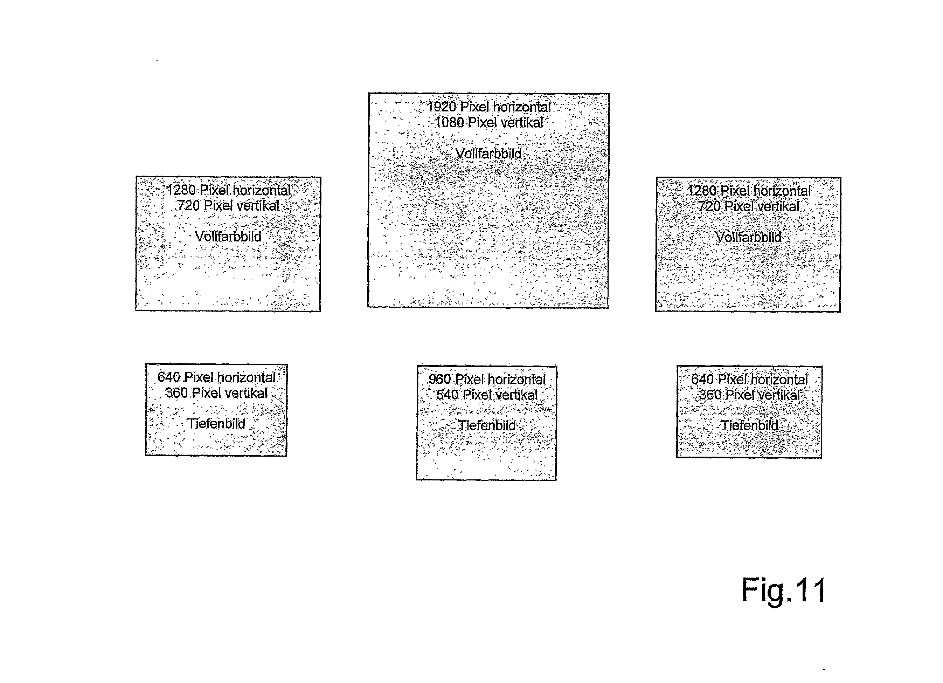

In der Fig. 11 ist schließlich eine schematische Darstellung für das erfindungsgemäße Übertragungsverfahren dargestellt. Dabei werden in einem MPEG-4 Datenstrom insgesamt 3 Farbbilder und 3 Tiefenbilder (bzw. jeweils Bewegtbilder-Streams) übertragen. Besonders vorteilhaft weist dabei einer der Farbbilder-Streams eine Auflösung von 1920x1080 Pixeln auf, während die anderen beiden eine Auflösung von 1280x720 Pixeln besitzen. Die dazugehörigen Tiefenbilder (bzw. Tiefenbilderstreams) werden jeweils in halber horizontaler und halber vertikaler Auflösung übertragen, also 960x540 Pixel bzw. 640x360 Pixel. Die Tiefenbilder bestehen im einfachsten Falle aus Graustufenbildern z. B. mit 256 oder 1024 möglichen Grauwerten pro Pixel, wobei jeder Grauwert einem Tiefenwert entspricht.

In einer weiteren Ausgestaltung würde das höchstauflösende Farbbild beispielweise 4096 x 4096 Pixel und die anderen Farbbilder 2048 x 2048 Pixel oder 1024 x 1024 Pixel aufweisen. Die dazugehörigen Tiefenbilder (bzw. Tiefenbilderstreams) werden jeweils in halber horizontaler und halber vertikaler Auflösung übertragen. Diese Variante wäre dann von Vorteil, wenn der gleiche Datensatz einmal für besonders hochauflösende Stereo-Darstellungen (z. B. im 3D-Kino mit Links/Rechtsbildern) und ein anderes Mal für weniger hochauflösende 3D-Darstellungen auf 3D-Displays, dann aber mit mindestens drei dargestellten Ansichten, verwendet werden soll.

### Bezugszeichenliste

- 1: Kamerasystem
- 11: rechte Kamera
- 12: linke Kamera
- 13: Hauptkamera
- 14: erste Satellitenkamera
- 15: zweite Satellitenkamera

- 2: Bildkonvertierungseinrichtung
- 20: Größenanpassungseinheit
- 21: Rektifizierungseinheit
- 22: Farbjustierungseinheit
- 23: Einheit zum Aufbau der Stackstruktur
- 24: Einheit zur Optimierung der Stackstruktur
- 25: Einheit zur Projektion der Stackstruktur auf die gewünschte Ansicht
- 26: Einheit zur Ermittlung der Tiefe

- 3: 3D-Bildwiedergabegerät
- 30: Einheit zur Rekonstruktion der Stackstruktur
- 31: Bildkombinationseinheit
- 32: 3D-Display
- 35: Einheit zur Projektion der Stackstruktur auf die gewünschte Ansicht

## Patentansprüche

1. Anordnung zur Übertragung von 3D-Informationen zum Zwecke der späteren hilfsmittelfrei räumlich wahrnehmbaren Wiedergabe auf Basis von mindestens drei verschiedenen Ansichten, **gekennzeichnet durch**
Mittel zum Ermitteln oder Erstellen der Tiefe für jedes Bild ausgehend von mindestens einem n-Tupel von Bildern, mit n>2, die unterschiedliche Blickwinkel eines Objektes oder einer Szene charakterisieren; und
Mittel zum Übertragen des n-Tupels von Bildern zusammen mit den jeweiligen Tiefeninformationen, insbesondere in Tiefenkarten, in einem Übertragungskanal,
wobei mindestens zwei Bilder des n-Tupels paarweise unterschiedliche Auflösungen aufweisen.

2. Anordnung nach Anspruch 1, **dadurch gekennzeichnet,**
**dass** das n-Tupel von Bildern ein Tripel von Bildern ist.

3. Anordnung nach Anspruch 2, **dadurch gekennzeichnet, dass** mindestens zwei der drei Tiefenkarten eine paarweise voneinander unterschiedliche Auflösung aufweisen.

4. Anordnung nach einem der Ansprüche 1-3, **dadurch gekennzeichnet,**
**dass** Mittel zum Generieren der Bilddaten und der Tiefeninformationen im MPEG-4 Format vorgesehen sind.

5. Anordnung nach einem der Ansprüche 1-4, ferner umfassend,
eine Hauptkamera (13) eines ersten Kameratyps zur Aufnahme von Bildern, und
mindestens eine Satellitenkamera (14, 15) eines zweiten Kameratyps zur Aufnahme von Bildern,
wobei sich die Kameratypen in mindestens einem Parameter unterscheiden, und wobei insgesamt mindestens drei Kameras, insbesondere eine Hauptkamera und zwei Satellitenkameras oder zwei Hauptkameras und eine Satellitenkamera, vorgesehen sind.

6. Anordnung nach Anspruch 5, ferner umfassend,
eine den Kameras nachgeordnete Bildkonvertierungseinrichtung (2) zur Übernahme der Ausgangsbilddaten und zur Aufbereitung derer.

7. Anordnung nach einem der Ansprüche 5-6, **dadurch gekennzeichnet,**
**dass** sich die beiden Kameratypen mindestens in der Auflösung der aufzunehmenden Bilder unterscheiden.

8. Anordnung nach einem der Ansprüche 5-7, **dadurch gekennzeichnet,**
**dass** sich die beiden Kameratypen mindestens durch den eingebauten Bildaufnahmechip unterscheiden.

9. Anordnung nach einem der Ansprüche 5-8, **dadurch gekennzeichnet,**
**dass** genau eine Hauptkamera (13) und zwei Satellitenkameras (14, 15) vorhanden sind.

10. Anordnung nach einem der Ansprüche 5-9, **dadurch gekennzeichnet,**
**dass** die Hauptkamera (13) und alle Satellitenkameras (14, 15) frame-genau synchronisiert aufnehmen.

11. Anordnung nach Anspruch 9, **dadurch gekennzeichnet,**
**dass** die Objektivmittelpunkte der Hauptkamera (13) und der zwei Satellitenkameras (14, 15) ein gleichschenkliges Dreieck bilden.

12. Verfahren zur Übertragung von 3D-Informationen zum Zwecke der späteren hilfsmittelfrei räumlich wahrnehmbaren Wiedergabe auf Basis von mindestens drei verschiedenen Ansichten, **dadurch gekennzeichnet,**
**dass** ausgehend von mindestens einem n-Tupel von Bildern, mit n>2, die unterschiedliche Blickwinkel eines Objektes oder einer Szene charakterisieren, für jedes Bild die Tiefe ermittelt oder erstellt wird und hernach in einem Übertragungskanal das n-Tupel von Bildern zusammen mit den jeweiligen Tiefeninformationen, insbesondere in Tiefenkarten, übertragen wird, wobei mindestens zwei Bilder des n-Tupels paarweise unterschiedliche Auflösungen aufweisen.

13. Verfahren nach Anspruch 12, **dadurch gekennzeichnet,**
**dass** das n-Tupel von Bildern ein Tripel von Bildern ist.

14. Verfahren nach Anspruch 13, **dadurch gekennzeichnet, dass** mindestens zwei der drei Tiefenkarten eine paarweise voneinander unterschiedliche Auflösung aufweisen.

15. Verfahren nach einem der Ansprüche 12-14, **dadurch gekennzeichnet,**
**dass** die Bilddaten und die Tiefeninformationen im MPEG-4 Format generiert werden.
